# FASCICULE DE BREVET EUROPEEN

(11) **EP 1 241 450 B1**
(45) Date de publication et mention de la délivrance du brevet: **07.12.2005**
(21) Numéro de dépôt: 02368021.8
(22) Date de dépôt: 26.02.2002
(51) Int. Cl.: G01F 11/26, B65D 47/30

(54) **Bouchon de distribution de granulés avec doseur**
Abgabe- und Dosierungsverschluss für Granulate
Delivering and metering closure for granules

(30) Priorité: 27.02.2001 FR 0102656
(43) Date de publication de la demande: 18.09.2002
(73) Titulaire: TOURNAIRE, S.A., 06338 Grasse Cedex (FR)
(72) Inventeur: Durand, Gilles, 06560 Valbonne (FR); Bottero, Jean-Claude, 06130 Grasse (FR)
(74) Mandataire: Bonneau, Gérard

(56) Documents cités:
- US-A- 2 053 631

## Description

### Domaine technique

La présente invention concerne un dispositif de fermeture et de distribution de substance pulvérulente à partir d'un récipient et concerne en particulier un bouchon de distribution de granulés avec doseur.

### Etat de la technique

Les dispositifs assurant la distribution de substance pulvérulente et en particulier de granulés à partir d'un récipient peuvent être intégrés dans le moyen de fermeture du récipient. Ainsi, pour une distribution en continu d'une substance pulvérulente à partir d'un récipient, le dispositif distributeur est intégré au couvercle du récipient pivotant ou coulissant sur celui-ci et dégage des orifices plus ou moins gros pour permettre le versement de la substance. De tels dispositifs sont notamment utilisés dans le domaine ménager pour le sel de cuisine.

Pour une distribution dosée d'une substance pulvérulente à partir d'un récipient, il existe des dispositifs doseur dotés d'un moyen pour contrôler la quantité de substance versée.

De tels dispositifs assurant la distribution dosée de substance pulvérulente ou de granulés permettent à l'utilisateur de contrôler avec une précision satisfaisante le volume de substance qu'il désire recueillir à partir du récipient.

L'inconvénient majeur de ces dispositifs de distribution est qu'ils n'assurent pas à la fois les fonctions de distribution continue et de distribution dosée dans leur système de fermeture.

Il existe également un dispositif décrit dans le document US2053631 composé d'un capuchon et d'une valve selon le préambule de la revendication 1.

### Exposé de l'invention

Le but de l'invention est de fournir un système de fermeture de récipient, capable d'assurer les différentes fonctions de fermeture, de distribution en continu et de distribution dosée.

L'objet de l'invention concerne donc un dispositif distributeur-doseur de substance pulvérulente composé d'un récipient contenant la matière pulvérulente et d'un bouchon pouvant être mis en rotation tout en restant solidaire du récipient. Le bouchon peut être placé par rotation dans une première position de fermeture dans laquelle le bouchon ferme le récipient de façon étanche et dans une deuxième position d'ouverture dans laquelle la substance pulvérulente peut être versée en dehors du récipient de manière continue. Le bouchon comprend en outre un réservoir pouvant contenir une dose déterminée de la matière pulvérulente et une ouverture de manière à ce que le réservoir puisse être rempli de la matière pulvérulente. Selon une première caractéristique du dispositif, le bouchon est muni d'un pan coupé qui permet la communication entre l'extérieur et l'intérieur du récipient lorsque le pan coupé est placé en face de l'ouverture du récipient, c'est à dire dans la deuxième position. Selon une deuxième caractéristique le réservoir peut être rempli de la matière pulvérulente lorsque le bouchon est placé par rotation dans une troisième position dans laquelle le réservoir communique avec l'intérieur du récipient par l'ouverture. Selon une troisième caractéristique, la matière pulvérulente remplissant le réservoir peut être versée à l'extérieur du réservoir et du récipient lorsque le bouchon est placé par rotation dans une quatrième position dans laquelle le réservoir communique avec l'extérieur du récipient par l'ouverture.

### Brève description des dessins

Les buts, objets et caractéristiques de l'invention apparaîtront plus clairement à la lecture de la description qui suit faite en référence aux dessins dans lesquels,
La figure 1a représente le dispositif distributeur-doseur selon l'invention, en position fermeture,
La figure 1b représente le dispositif distributeur-doseur selon l'invention, en position distribution en continu,
La figure 1c représente le dispositif distributeur-doseur selon l'invention en position de remplissage du doseur,
La figure 1d représente le dispositif distributeur-doseur selon l'invention, en position de versement du doseur,
Les figures 2a à 2c illustrent le mode distribution continue du dispositif distributeur-doseur selon l'invention.
Les figures 3a à 3d illustrent le mode distribution dosée du dispositif distributeur-doseur selon l'invention.

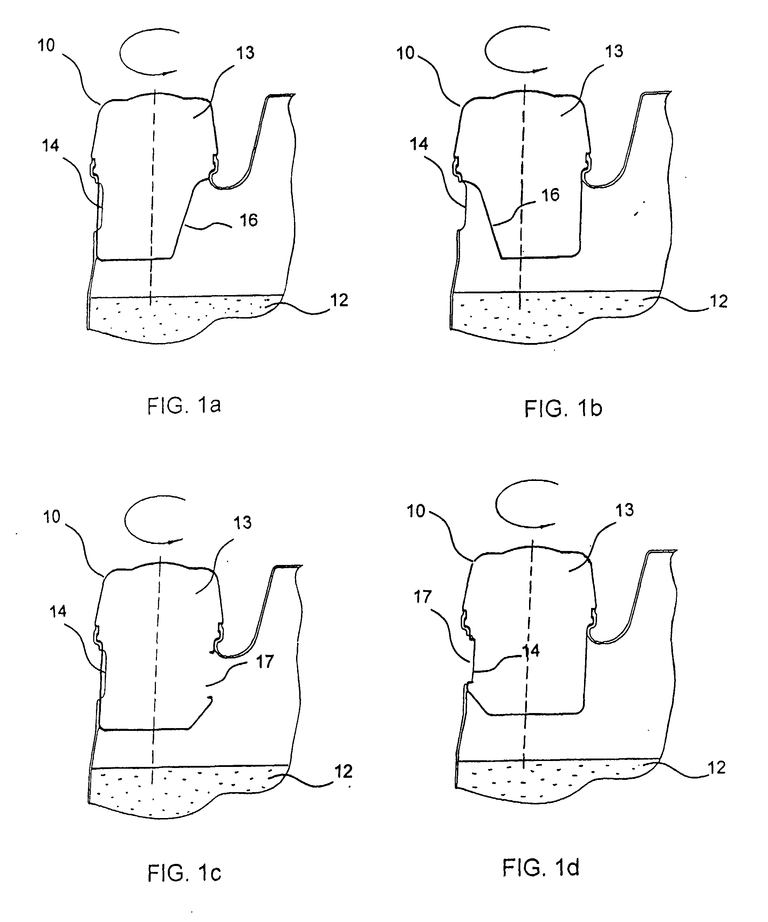

Le dispositif distributeur-doseur qui fait l'objet de l'invention est illustré en coupe selon ses quatre positions possibles sur les figures 1a à 1d.

### Description détaillée de l'invention

Le dispositif selon l'invention est composé d'un bouchon 10 creux délimitant un réservoir de volume déterminé représentant une dose. Le bouchon est placé en force et maintenu sur le récipient 11 grâce à des rainures de clipsage. La mise en place par clipsage du bouchon selon l'invention sur le récipient permet le remplacement du récipient lorsque celui-ci est vide.

Sur la figure 1a, le dispositif selon l'invention est en position fermée. Dans cette position, la substance 12 contenue dans le récipient 11 ne peut pas s'écouler par la sortie 14 du récipient quelle que soit la position de celui-ci.

Lorsque le bouchon 10 du dispositif est tourné de 180° par rapport à sa position fermée, la sortie 14 du récipient n'est plus obturée par la paroi du bouchon 10 du dispositif. Dans cette position, la forme 16 du bouchon est adaptée de façon à ouvrir la communication entre le récipient 11 et l'extérieur. Cette position permet une distribution en continu de la substance 12 et est représentée sur la figure 1b.

La position du dispositif sur la figure 1c est obtenue par rotation de celui-ci de 90° à partir de la position fermée et ouvre la communication entre l'intérieur du bouchon 10 et l'intérieur du récipient 11. Ainsi, par gravité, le réservoir 13 du dispositif peut être rempli de substance pulvérulente sans risque de contact de l'utilisateur avec la substance.

La dose de substance pulvérulente contenue dans le réservoir 13 du dispositif est ensuite versée à l'extérieur par simple rotation de 180° du bouchon 10 à partir de la position précédente. Dans cette position illustrée sur la figure 1d, aucune quantité supplémentaire de substance 12 ne vient remplir le réservoir 13, en effet l'ouverture 17 permettant la distribution en continu de la substance 12 et non représentée sur les figures 1c et 1d est obturée par la paroi du récipient 11.

Les quatre positions du dispositif de fermeture sont indiquées par des repères dessinés sur le dessus de celui-ci.

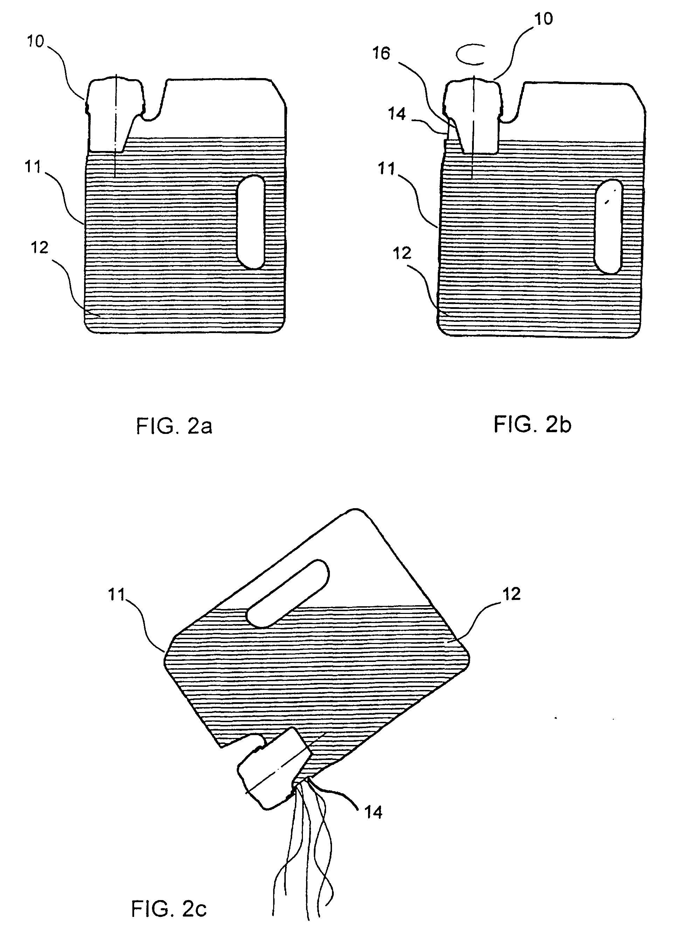

Les figures 2a à 2c illustrent en coupe le mode distribution en continu du dispositif selon l'invention.

Sur la figure 2a, le bouchon 10 du dispositif selon l'invention est dans sa position de fermeture sur le récipient 11 contenant la substance pulvérulente 12. Par rotation de 180°, le bouchon 10 est placé dans sa position d'ouverture illustrée sur la figure 2b. Dans cette position, le pan coupé 16 du bouchon 10 se trouve en face de l'ouverture 14 du récipient 11. Lorsque le récipient 11 est retourné, la substance pulvérulente 12 est versée en continu à l'extérieur du récipient 11 par l'ouverture 14.

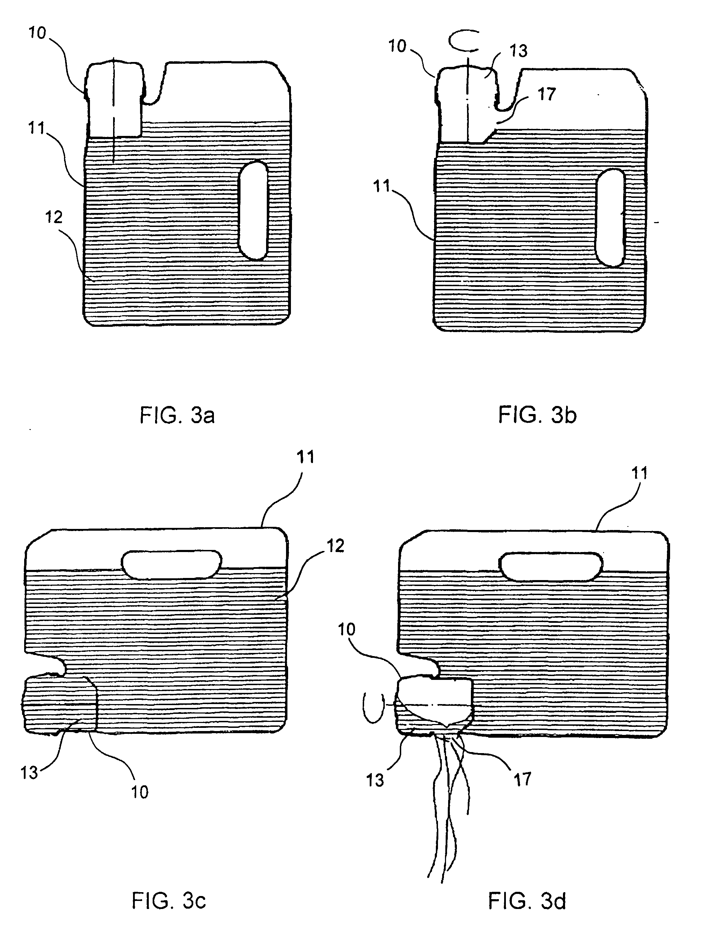

Les figures 3a à 3d illustrent en coupe le mode distribution dosée du dispositif selon l'invention.

Sur la figure 3a, le bouchon 10 du dispositif selon l'invention est dans sa position de fermeture sur le récipient 11 contenant la substance pulvérulente 12. Par rotation de 90°, le bouchon 10 est placé de façon à ce que son réservoir 13 communique avec l'intérieur du récipient 11 par l'ouverture 17. Cette position est illustrée sur la figure 3b. Sur la figure 3c, le récipient 11 est retourné de 90° et la substance pulvérulente 12 remplit par gravitation le réservoir 13 du dispositif. Sur la figure 3d, le bouchon 10 est tourné de 180° par rapport à sa position de remplissage illustrée sur la figure précédente 3c, et la substance contenue dans le réservoir 13 s'écoule alors à l'extérieur par l'ouverture 17.

On peut prévoir sur la paroi du dispositif distributeur-doseur un rainurage qui permet à l'utilisateur lors de la manipulation du bouchon, de sentir les positions du dispositif sans avoir à regarder les repères dessinés sur celui-ci.

Ainsi , deux rainures peuvent être disposées à l'intérieur du bouchon 10 du dispositif de fermeture distributeur-doseur. Les deux rainures sont situées à la même hauteur, la première ayant une longueur égale à la moitié de la circonférence du bouchon 10 et la deuxième rainure étant située en face de la première. Lorsque le bouchon 10 est en place sur le récipient, une protubérance sur le récipient vient se loger dans les rainures permettant ainsi le repérage sensitif des positions du dispositif. En effet, la plus longue rainure est située de façon à ce que l'utilisateur passe de la position remplissage de la dose représentée sur la figure 1c à la position versage de la dose représentée sur la figure 1d en tournant sans effort le bouchon de 180°, les deux positions étant repérées et ressenties par une butée. La deuxième rainure est située de façon à ce que pour passer de la position fermée à une autre position (ou de la position ouverture à une autre position), l'utilisateur doive exercer un petit effort pour tourner le bouchon.

## Revendications

1. Dispositif distributeur-doseur de substance pulvérulente (12) composé d'un récipient (11) contenant la matière pulvérulente (12) et d'un bouchon (10) pouvant être mis en rotation tout en restant solidaire dudit récipient (11), ledit bouchon (10) pouvant être placé par rotation dans une première position de fermeture dans laquelle le bouchon (10) ferme ledit récipient (11) de façon étanche et dans une deuxième position d'ouverture dans laquelle la substence pulvérulente (12) peut être versée en dehors dudit récipient de manière continue, ledit bouchon (10) comprenant en outre un réservoir (13) pouvant contenir une dose déterminée de la matière pulvérulente (12) et une ouverture (17) de manière à ce que ledit réservoir (13) puisse être rempli de la matière pulvérulente (12),
ledit dispositif étant **caractérisé en ce que**
ledit bouchon (10) est muni d'un pan coupé (16) qui permet la communication entre l'extérieur et l'intérieur du récipient (11) lorsque ledit pan coupé (16) est placé en face de l'ouverture (14) du récipient (11), c-à-d. dans la deuxième position,
et **en ce que** ledit réservoir peut être rempli de la matière pulvérulente (12) lorsque ledit bouchon (10) est placé par rotation dans une troisième position dans laquelle ledit réservoir (13) communique avec l'intérieur du récipient (11) par ladite ouverture (17),
et **en ce que** ladite matière pulvérulente (12) remplissant ledit réservoir (13) puisse être versée à l'extérieur dudit réservoir (13) et dudit récipient lorsque le bouchon (10) est placé par rotation dans une quatrième position dans laquelle ledit réservoir (13) communique avec l'extérieur du récipient (11) par ladite ouverture (17).

2. Dispositif distributeur-doseur selon la revendication 1 , dans lequel ladite ouverture (17) est placée à 90° sur la circonférence du bouchon par rapport au pan coupé (16).

3. Dispositif distributeur-doseur selon la revendication 1 ou 2, dans lequel ledit bouchon est mis en place sur le récipient par clipsage permettant ainsi le remplacement dudit récipient lorsque celui-ci est vide.

4. Dispositif distributeur-doseur selon l'une des revendications 1 à 3, **caractérisé en ce que** la paroi interne du bouchon (10) comporte deux rainures où vient se loger une protubérance située sur le récipient (11).

5. Dispositif distributeur-doseur selon la revendication 4, **caractérisé en ce que** la première rainure est située de façon à ce que l'utilisateur passe de la position remplissage de la dose à la position versage de la dose en tournant sans effort le bouchon de 180°, les deux positions étant repérées et ressenties par une butée.

6. Dispositif distributeur-doseur selon la revendication 4 ou 5, **caractérisé en ce que** la première rainure est située de façon à ce que, lorsque le bouchon est en position fermeture, l'utilisateur doive exercer un petit effort pour tourner le bouchon dans une autre position.

7. Dispositif distributeur-doseur selon la revendication 4 ou 5, **caractérisé en ce que** la première rainure est située de façon à ce que, lorsque le bouchon est en position ouverture, l'utilisateur doive exercer un petit effort pour tourner le bouchon dans une autre position.

## Patentansprüche

1. Verteilungs- und Dosiervorrichtung für eine pulverförmige Substanz (12), die sich aus einem Behälter (11), der das pulverförmige Material (12) enthält, und einem Stöpsel (10), der gedreht werden kann, während er mit dem Behälter (11) aus einem Stück bleibt, zusammensetzt, wobei der Stöpsel (10) durch Drehen in einer ersten Verschlussposition, in welcher der Stöpsel (10) den Behälter (11) auf undurchlässige Weise verschließt, und in einer zweiten Öffnungsposition, in welcher die pulverförmige Substanz (12) auf kontinuierliche Weise aus dem Behälter gegossen werden kann, platziert werden kann, wobei der Stöpsel (10) ferner eine Kammer (13), die eine bestimmte Menge des pulverförmigen Materials (12) enthalten kann, und eine Öffnung (17), so dass die Kammer (13) mit dem pulverförmigen Material (12) gefüllt werden kann, umfasst,
wobei die Vorrichtung **dadurch gekennzeichnet ist, dass**
der Stöpsel (10) mit einer schrägen Kante (16) versehen ist, die die Verbindung zwischen der Außenseite und der Innenseite des Behälters (11) ermöglicht, wenn die schräge Kante (16) vor der Öffnung (14) des Behälters (11), d. h. in der zweiten Position, platziert wird,
und **dadurch**, dass die Kammer mit dem pulverförmigen Material (12) gefüllt werden kann, wenn der Stöpsel (10) durch Drehen in einer dritten Position platziert wird, in der die Kammer (13) durch die Öffnung (17) mit der Innenseite des Behälters (11) in Verbindung steht,
und **dadurch**, dass das pulverförmige Material (12), das die Kammer (13) füllt, aus der Kammer (13) und dem Behälter gegossen werden kann, wenn der Stöpsel (10) durch Drehen in einer vierten Position platziert wird, in der die Kammer (13) durch die Öffnung (17) mit der Außenseite des Behälters (11) in Verbindung steht.

2. Verteilungs- und Dosiervorrichtung gemäß Anspruch 1, wobei die Öffnung (17) hinsichtlich der schrägen Kante (16) bei 90" auf dem Umfang des Stöpsels platziert ist.

3. Verteilungs- und Dosiervorrichtung gemäß Anspruch 1 oder 2, wobei der Stöpsel durch Festklemmen über den Behälter gepasst wird, was das Ersetzen des Behälters, wenn dieser leer ist, ermöglicht.

4. Verteilungs- und Dosiervorrichtung gemäß einem der Ansprüche 1 bis 3, **dadurch gekennzeichnet, dass** die Innenwand des Stöpsels (10) zwei Rillen beinhaltet, in denen ein sich auf dem Behälter (11) befindlicher Vorsprung untergebracht wurde.

5. Vertellungs- und Dosiervorrichtung gemäß Anspruch 4, **dadurch gekennzeichnet, dass** die erste Rille so angeordnet ist, dass der Benutzer von der Position des Auffüllens mit der Dosis zu der Position des Gießens der Dosis übergeht, indem er den Stöpsel ohne Kraftaufwand um 180° dreht, wobei die beiden Positionen durch einen Stopper markiert sind und wahrgenommen werden.

6. Vertellungs- und Dosiervorrichtung gemäß Anspruch 4 oder 5, **dadurch gekennzeichnet, dass** die erste Rille so angeordnet ist, dass der Benutzer, wenn sich der Stöpsel in der Verschlussposition befindet, etwas Kraft aufwenden muss, um den Stöpsel in eine andere Position zu drehen.

7. Verteilungs- und Dosiervorrichtung gemäß Anspruch 4 oder 5, **dadurch gekennzeichnet, dass** die erste Rille so angeordnet ist, dass der Benutzer, wenn sich der Stöpsel in der Öffnungsposition befindet, etwas Kraft aufwenden muss, um den Stöpsel in eine andere Position zu drehen.

## Claims

1. A pulverulent substance (12) dispensing/measuring device consisting of a receptacle (11) containing the pulverulent matter (12) and of a cap (10) which is rotatable whilst remaining integral with said receptacle (11), whereby said cap (10) can be rotationally placed in a first closed position in which the cap (10) hermetically seals said receptacle (11) and in a second open position in which the pulverulent substance (12) can be continuously poured out of said receptacle, said cap (10) further including a vessel (13) capable of containing a determined measure of the pulverulent matter (12) and an opening (17) such that said vessel (13) can be filled with the pulverulent matter (12).
said device being **characterised in that**
said cap (10) is provided with a cant (16) enabling communication between the outside and the inside of the receptacle (11) when said cant (16) is placed opposite the opening (14) of the receptacle (11), i.e. in the second position,
and **in that** said vessel can be filled with the pulverulent matter (12) when said cap (10) is rotationally placed in a third position in which said vessel (13) communicates with the inside of the receptacle (11) via said opening (17),
and **in that** said pulverulent matter (12) filling said vessel (13) can be poured out of said vessel (13) and said receptacle when the cap (10) is rotationally placed in a fourth position in which said vessel (13) communicates with the outside of the receptacle (11) via said opening (17).

2. The dispensing/measuring device according to Claim 1, in which said opening (17) is located on the circumference of the cap at 90° to the cant (16).

3. The dispensing/measuring device according to Claim 1 or 2, in which said cap is snap-fitted onto the receptacle, thus enabling said receptacle to be replaced when it is empty.

4. The dispensing/measuring device according to one of Claims 1 to 3, **characterised in that** the internal wall of the cap (10) comprises two grooves which accommodate a protrusion situated on the receptacle (11).

5. The dispensing/measuring device according to Claim 4, **characterised in that** the first groove is situated such that the user moves from the measure-filling position to the measure-pouring position by effortlessly turning the cap through 180°, the two positions being located and sensed by a stop.

6. The dispensing/measuring device according to Claim 4 or 5, **characterised in that** the first groove is situated such that, when the cap is in the closed position, the user must exert a small amount of effort in order to turn the cap into another position.

7. The dispensing/measuring device according to Claim 4 or 5, **characterised in that** the first groove is situated such that, when the cap is in the open position, the user must exert a small amount of effort in order to turn the cap into another position.
